# EUROPEAN PATENT APPLICATION

(11) **EP 1 090 718 A2**
(43) Date of publication of application: **11.04.2001**
(21) Application number: 00114327.0
(22) Date of filing: 04.07.2000
(51) Int. Cl.: B25B 11/00

(54) **A suction table apparatus for a numerical control machine**

(30) Priority: 05.10.1999 JP 28381799
(71) Applicant: HEIAN CORPORATION, Hamamatsu-shi, Shizuoka-ken (JP)
(72) Inventor: Suzuki, Yukitomo, c/o Heian Corporation, Hamamatsu-shi, Shizuoka-ken (JP)
(74) Representative: Kirschner, Klaus Dieter, Dipl.-Phys.

(57) **Abstract**

Long support members (20) are mounted on a table (17) and are moved to direction of a width of the table (17). Either rule stopper frames (23) are moved and pad frames (26) are fixed on long support members (20), or rule stopper frames (23) are fixed and pad frames (26) are moved on long support members (20). The long support members are moved according to length and width dimensions of a process board.

## Description

The present invention relates to a suction table apparatus for a numerical control machine having plural moving frames on which one stopper and plural suction pads are respectively mounted and a process board is surely positioned on the suction pads.

In a prior art, there is provided a numerical control routor in which a head structure having plural heads is moved by a servomotor along rails attached to a front side of a cross beam on upper portion of a base member, plural movement frames are respectively moved and positioned by a servomotor in parallel on a table frame, plural movement pad frames are mounted to move on the movement frame respectively by a servomotor, suction pads are respectively mounted on the movement pad frames to move up and down by cylinders, whereby the movement frames and the movement pad frames are positioned in predetermined spaces respectively.

However, in the numerical control machine, when a wide process board is positioned on the suction pads on the table frame to be processed, the movement frames are moved and positioned on the table frame in the same spaces, the pad frame are moved and positioned on the movement frames in the same space respectively. Therefore, after one process board is processed, when the next process board of the different wide or length is process, the time for moving the movement frames and pad frames becomes long, because the process board cannot suck in the most suitable condition, therefore the working time for positioning the process board becomes long.

It is, therefore, the object of the present invention to provide a suction table apparatus for a numerical control machine in which process board can be easily positioned and sucked on the suction pad.

In order to accomplish the above object, the present invention comprises a suction table apparatus for a numerical control machine comprising a plurality of long support members mounted to be moved to a width direction of a table, rule stopper frames mounted to be moved along the long support members respectively near the one end thereof, rule stoppers mounted on the rule stopper frames respectively, a rule stopper moving apparatus having a servomotor for moving the rule stopper frames, pad frames fixed in a predetermined space to the rule stopper frame on each of the long support members, and suction pads mounted on each of the pad frames.

In order to accomplish the above object, the present invention comprises a suction table apparatus for a numerical control machine comprising a plurality of long support members mounted to be moved to a width direction of a table, rule stopper frames fixed to one ends the long support members respectively, rule stoppers mounted on the rule stopper frames respectively, pad frames mounted to move on the long support members respectively, and suction pads mounted on each of the pad frames, pad frames moving apparatus having a servomotor for moving the pad frames.

According to an aspect of the invention, a suction table apparatus for a numerical control machine is provided in which rule stopper frames are respectively mounted to move on sides of plural long support frames and pad frames are respectively fixed on the plural moving frames.

According to another aspect of the invention, a suction table apparatus for a numerical control machine is provided in which rule stopper frames are fixed on sides of plural long support frames and pad frames are respectively mounted to move on the plural moving frames.

Preferred embodiments of the invention and the features thereof are given in the appended claims and sub-claims.

Preferred embodiments of the invention will now be described in detail in conjunction with the accompanying drawings in which:

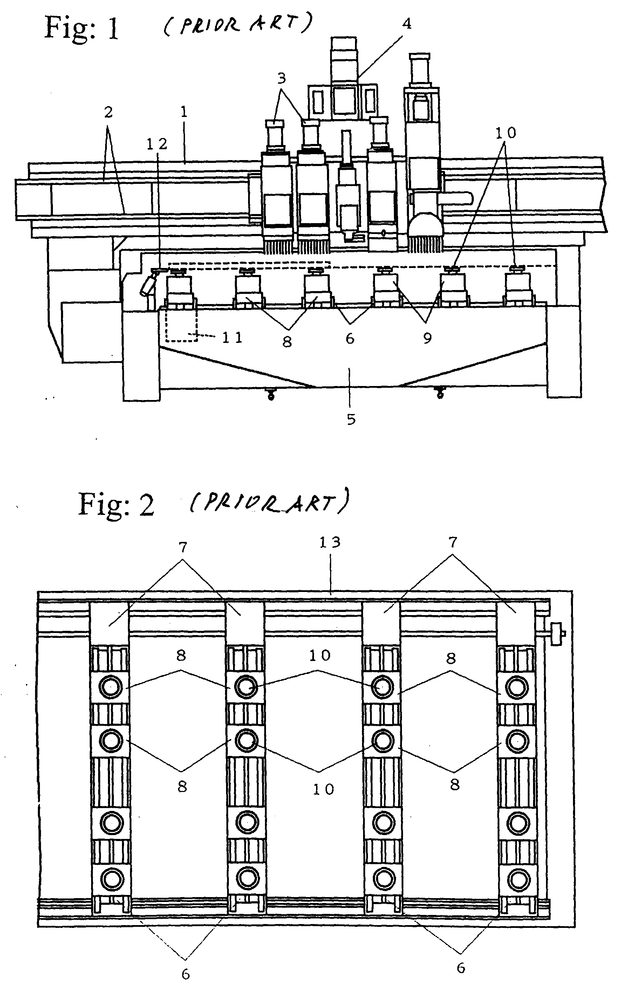

Fig. 1 shows a front view of a numerical control machine provided by the applicant.
Fig. 2 shows a plane view of a suction table of the numerical control machine in Fig. 1.
Fig. 3 shows a plane view of the suction table on which a large process board is sucked in Fig. 1.
Fig. 4 shows a plane view of the suction table on which a small process board is sucked in Fig. 1.
Fig. 5 shows a plane view of a suction table apparatus for a numerical control machine in the embodiment of the present invention.
Fig. 6 shows a side view of a suction table apparatus for a numerical control machine in Fig. 1.
Fig. 7 shows a rear view of a suction table apparatus in Fig. 1.
Fig. 8 shows a view on which a large process board is mounted on a suction table apparatus in Fig. 1.
Fig. 9 shows a view on which a small process board is mounted on a suction table apparatus in Fig. 1.
Fig. 10 shows a plane view of a suction table apparatus for a numerical control machine in the other embodiment of the present invention.
Fig. 11 shows a plane view of a suction table apparatus for a numerical control machine in the other embodiment of the present invention.
Fig. 12 shows a plane view of a suction table apparatus for a numerical control machine in the other embodiment of the present invention.

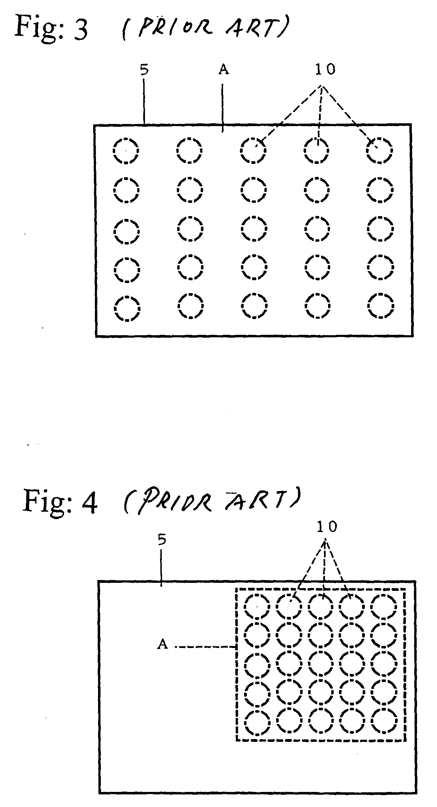

The applicant provided a numerical control machine (see Japanese Patent Opening No. 6-43044) shown in Figs, 1 and 2 in which a head structure 4 having plural heads 3 is moved by servomotor along rails 2 attached to front of a base frame 1. A table 5 is moved by servomotor to cross to the moving direction of the head structure 4. A plurality of moving racks 6 are mounted in parallel to be moved on the table 5. A plurality of moving pad rack 8 are mounted to be moved on the moving racks respectively. A plurality of suction pads 10 are attached to plural up and down cylinders mounted on the moving pad racks 8 respectively. The moving racks 8 are respectively positioned by servomotors 11. In this machine, the spaces between the moving racks 6 and the moving pad racks 8 are regulated to predetermined values, two examples of the positioning of the suction pads being shown in Figs. 3 and 4. Also rule stoppers 12 and 13 are provided with the end of the table 5.

However, in the numerical control machine, when a large process board A is processed, the suction pads 10 are moved to the locations shown in Fig. 3 where they have the wide spaces of the same magnitude. When a small process board A is processed, the suction pads are moved to the locations shown in Fig. 4 where they have the narrow spaces of the same magnitude. Therefore, when the different process boards are processed in turn, a long time is necessary for moving the suction pads 10 to the required locations such that the process board is sucked by the suction pads 10 in an optimal way, and the overall time for processing the board becomes long.

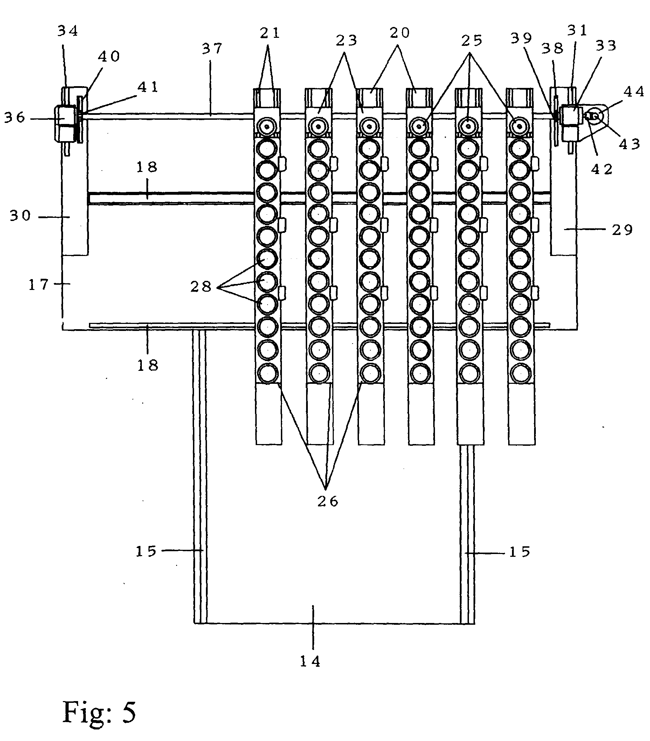

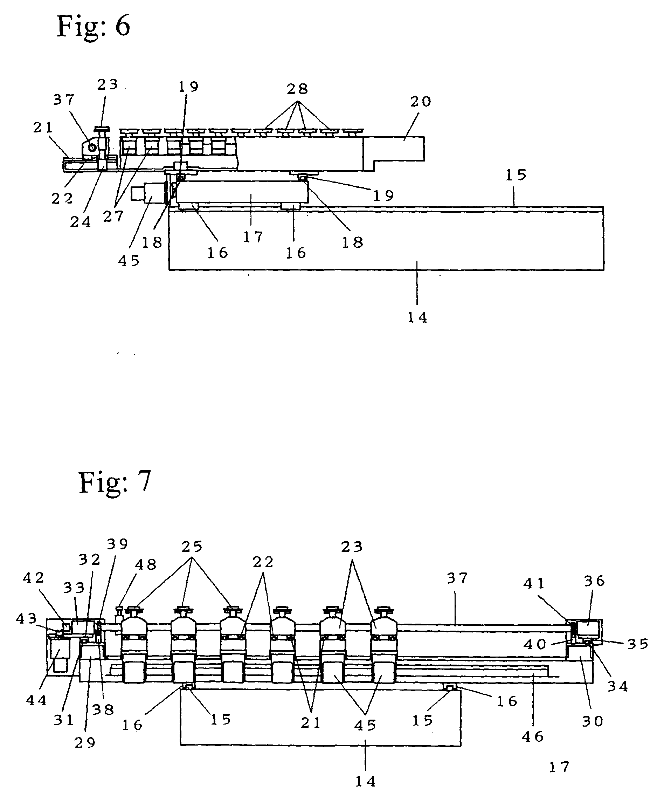

Referring to Figs. 4 to 7, rails 15 are mounted on a base 14, and bearings 16 engaged with the rails 15 are attached to the lower part of a table 17. Also, rails 18 are mounted on the table 17, and bearings 19 engaged with the rails 18 are attached to the lower parts of plural long support members 20 respectively. Rails 21 are respectively mounted on one ends of the long support members 20, and bearings 22 engaged with the rails 21 are respectively attached to rule stopper frames 23. Up and down cylinders 24 attaching rule stoppers 25 are mounted on the rule stopper frames 23.

Pad frames 26 are mounted near the rule stopper members 23 on the long support members 20 respectively, and a plurality of up and down cylinders 27 are respectively mounted on the pad frames 26. Suction pads 28 are respectively attached to the moving shafts of the up down cylinders 27.

Fixed stages 29 and 30 are fixed on the both ends of the table 17. A bearing 32 is engaged with a rail 31 mounted on the fixed stage 29 and is attached to a plumber block 33. A bearing is engaged with a rail 34 mounted on the fixed stage 30 and is attached to a plumber block 36. The two ends of a rotary shaft 37 are supported by the plumber blocks 33 and 36. The rotary shaft 37 penetrates holes in the rule stopper members 23 mounted on the long support members 20.

A rack 38 is mounted on the fixed stage 29 in parallel with the rail 31 and is engaged with a pinion 39 attached to the rotary shaft 37. Another rack 40 is mounted on the fixed stage 30 in parallel with the rail 34 and is engaged with a pinion 41 attached to the rotary shaft 37.

A bevel gear 42 fixed one end of the rotary shaft 37 is engaged with a bevel gear 43 of a rule stopper moving servomotor 44 fixed to the fixed stage 29. Support member moving servomotors 45 for moving the long support members 20 are provided with the one end of the long support members 20, pinions (not shown) fixed the rotary shafts of the support member moving servomotors 45 are engaged with rack 46 mounted on the table 17, and the long support members 20 are respectively moved by the support member moving servomotor 45. The table 17 is moved by a servomotor (not shown) provided at the base 14.

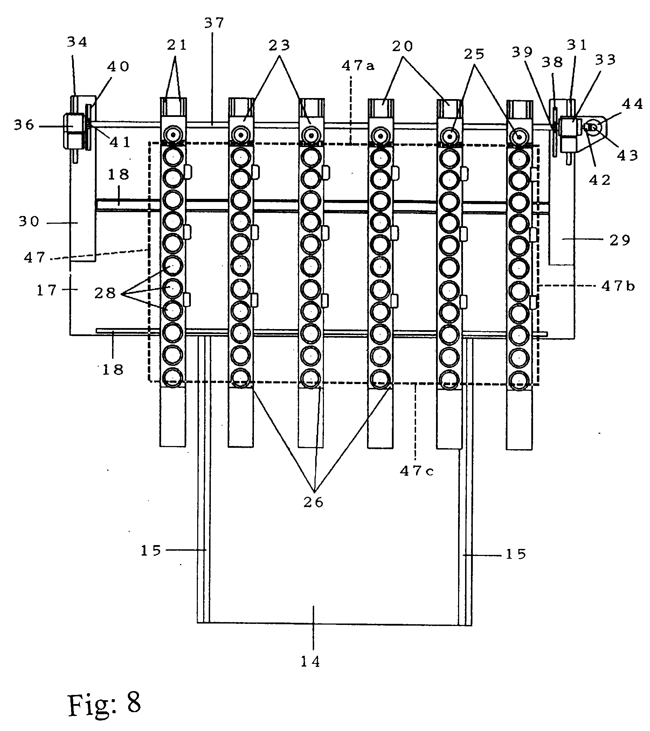

In the suction table apparatus in the present embodiment, when a large process board 47 is sucked on the suction pads 28, the long support members 20 are moved by the support member moving servomotors 45 and positioned at the locations as shown in Fig. 8, such that the spaces between the long support members 20 become wide and are the same from one of the long support members to the other. Then when the rule stoppers 25 are risen by the up and down cylinders 24, and the process board 47 is sucked on the fixed suction pads 28 in such a position that one edge 47a is contacted with the rule stoppers 25 and the edge 47b adjoining the one edge 47a is contacted with rule stoppers 48. If the other edge 47c opposite to the one edge 47 is positioned on the middles of the suction pads 28 in one end of the long support members 20 which means that the suction pads can not apply proper suction, the rotary shaft 37 is rotated by the rotation of the rule stopper moving servomotor 44 so that the rule stopper frames 23 are moved along the long support member 20, and the rule stoppers 25 are moved to such a position that the other edge 47c of the process board 47 pass through the suction pads 28 in the one end of the long support members 20. Then the suction pads 28 are risen by the up and down cylinders 27, the process board 47 is fixed to position by the suction pads 28 and the rule stoppers 25 are lowered by the up and down cylinders 24 and the process board 47 is processed by the numerical control machine.

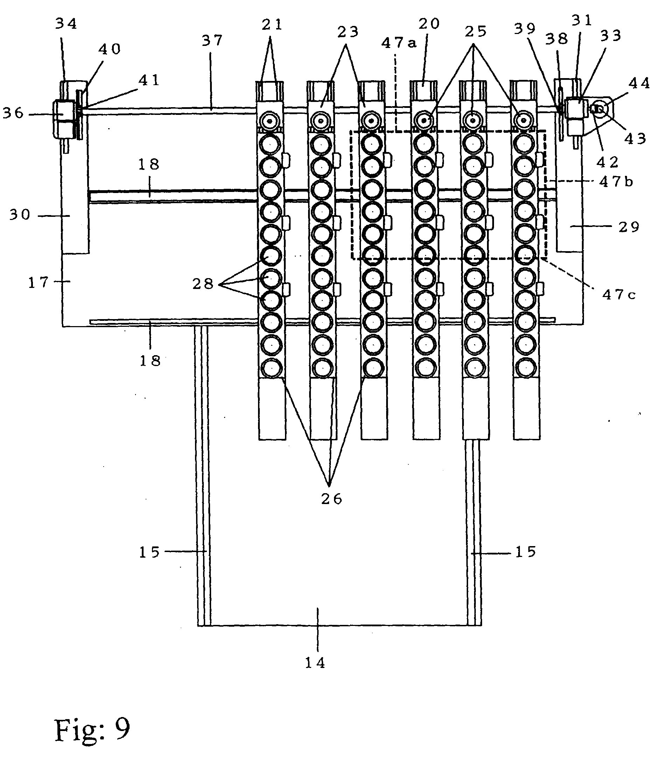

When the process board 47 is small, the long support members 20 are moved by the support member moving servomotors 45 and positioned at the locations as shown in Fig. 9, such that the, spaces between the long support members 20 become narrow and are the same from one of the long support members to the other. As shown in Fig. 9, only some long support members 20 are used when the process board has a small size. First, one edge 47a of the process board 47 is contacted with the rule stoppers 25 and the edge 47b adjoining the one edge 47a is contacted with rule stoppers 48. If the other edge 47c opposite to the one edge 47a is positioned on the middle of each of the suction pads 28 in the long support members 20 which means that the suction pads can not apply proper suction, the rotary shaft 37 is rotated by the rotation of the rule stopper moving servomotor 44 so that the rule stopper frames 23 are moved on the long support members 20 respectively, and the rule stoppers 25 are moved to such positions that the other edge 47c of the process board 47 traverses each of the suction pads 28 in the one end of the long support members 20. Then the suction pads 28 are risen by the up and down cylinders 27, the process board 47 is fixed to position by the suction pads 28 and the rule stoppers 25 are lowered by the up and down cylinders 24 and the process board 47 is processed by the numerical control machine.

In the present embodiment, because the rule stopper frames 23 and the pad frames 26 are mounted on the long support members 20, only the long support members 20 have to be moved by a small amount, the different process boards 47 are sucked on the suction pads 28 in an optimal way, and the efficiency of the processing of the process board is improved.

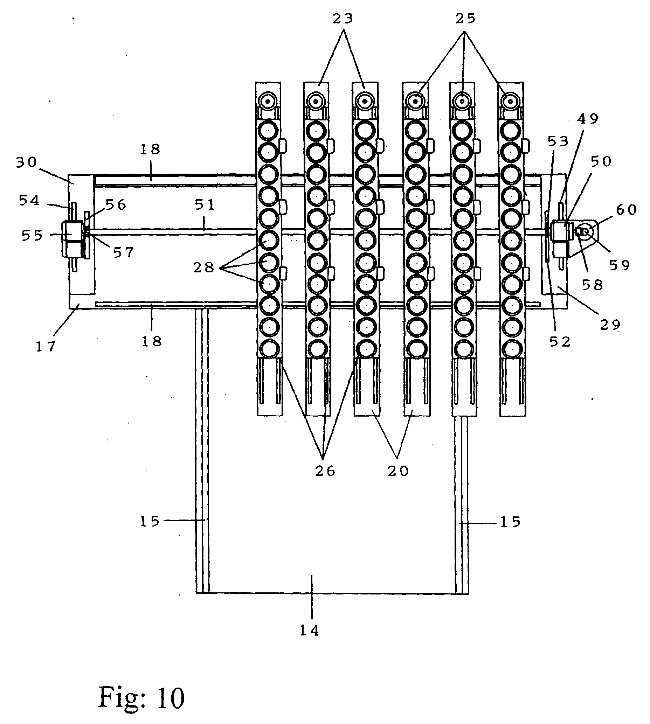

Referring to Fig. 10, the apparatus comprises a base 14, rails 15 on the base 14, and a table 17 on the rails 15. Rails 18 support long support members 20 which carry rule stopper frames 23 having rule stoppers 25. Fixed stages 29, 30 are provided at the two sides of the table 17. The explanation of these parts is omitted because these parts are same as the above embodiment.

In the embodiment of Fig. 10, the rule stopper frames 23 are fixed to the ends of the long support members 20. The pad frames 26 are respectively mounted to move on the long support members 20. A rail 49 is fixed the fixed stage 29, and a bearing (not shown) engaged with rail 49 is attached to a plumber block 50. One end of a rotary shaft 51 is supported to rotate by the plumber block 50. A rack 52 is fixed the fixed stage 29 in parallel with the rail 49, and a pinion 53 fixed the rotary shaft 51 is engaged with the rack 52.

A rail 54 is fixed the fixed stage 30, a bearing (not shown) engaged with rail 54 is attached to a plumber block 55, the other end of a rotary shaft 51 is supported to rotate by the plumber block 55. A rack 56 is fixed to the fixed stage 30 in parallel with the rail 54, and a pinion 57 fixed the rotary shaft 51 is engaged with the rack 56. The rotary shaft 51 penetrates holes in the pad frames 26 of the long support member 20. A bevel 58 fixed the one end of the rotary shaft 51 is engaged with a bevel gear 59 of a pad frame moving servomotor 60.

In the embodiment of Fig. 10, when one edge of the process board 47 is contacted with the rule stoppers 25 and is positioned on the long support members 20, if the other opposite edge 47c of the process board 47 is positioned in the middle of each of the suction pads 28 which means that the suction pads 28 are not working properly, the pad frames 26 are moved by the pad frame moving servomotor 60, so that the other opposite edge 47c of the process board 47 traverses the suction pads 28. In this way, the process board is positioned and sucked by the suction pads 28 properly.

In the embodiment, because the long support members 20 are moved in the direction of the width of the table 17, the rule stopper frames 23 are fixed on the one edges of the long support members 20, and the pad frames 26 are moved on the long support members 20, the process board 47 is so positioned on the pad frames 26 that the other edges of the process board 47 are not positioned in the middle of the suction pads 28. Accordingly the different process boards 47 are sucked on the fix suction pads 28 in an optimal way and the efficiency of the efficiency of the process way of the process board is improved.

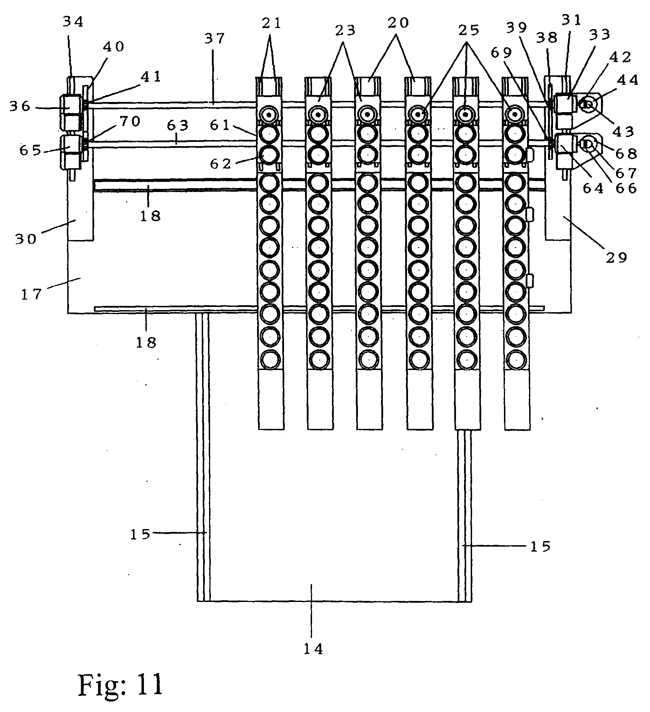

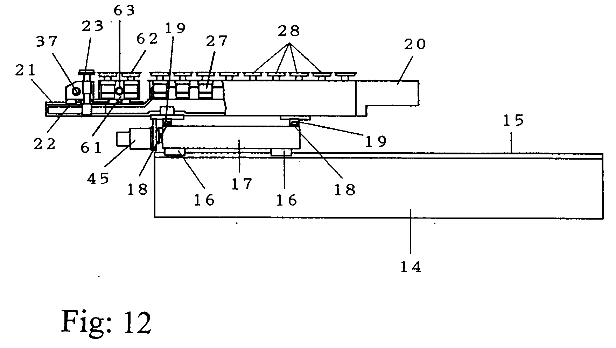

Referring to Figs. 11 and 12, the apparatus comprises a base 14, rails 15 on the base, and a table 17 on the base 14. Rails 15 support long support members 20. Rails 21 support rule stopper frames 23 having rule stoppers 25. Suction pads 28 are provided on the long support members 20. Fixed stages 29 and 30 support a rail 31 and a rail 34 respectively. Plumber blocks 33,36 are provided on the fixed stages 29,30 respectively. A rotary shaft 37 extends between the plumber blocks 33,36. A rack 38 on the stage 29 is engaged by a pinion 39, and a rack 40 on the stage 30 is engaged by a pinion 41. Bevel gears 43 connect the shaft 37 to a stopper moving servomotor 44. The explanation of these constitutions is omitted because these constitutions are same as the above embodiment.

In the embodiment of Figs. 11 and 12, further moving pad frames 61 are mounted on the long support members 20 between the rule stopper frames 23 and the pad frames 26. Suction pads 62 are attached to moving shafts of up and down cylinders (not shown) mounted on the moving pad frames 61.

A rotary shaft 63 penetrates holes of the moving pad frames 61. Both ends of the rotary shaft 63 are supported by plumber blocks 64 and 65, and bearings respectively attached to the plumber blocks 64 and 65 are respectively engaged with the rails 31 and 34 which are mounted on the fixed stages 29 and 30 respectively. A bevel gear 66 fixed the end of the rotary shaft 63 is engaged with a bevel gear 67 of a moving pad servomotor 68, pinions 69 and 70 fixed the rotary shaft 63 are engaged with the racks 38 and 40 respectively mounted on the fixed stages 29 and 30, whereby the moving pad frames 61 are moved between the rule stopper frames 23 and the fixed pad frames 26 by the moving pad servomotor 68. The spaces between the rule stopper frames 23 and the fixed pad frames 26 are regulated in an optimal way.

In an alternative embodiment of the embodiment of Figs. 11 and 12, when the rule stopper frames 23 are fixed and the pad frames 26 are moved on the long support members 20, the moving pad frames 61 may be moved also to adapt the field of suction pads to the size of the process board.

## Claims

1. A suction table apparatus for a numerical control machine characterized by a plurality of long support members (20) mounted to be moved to a width direction of a table (17), rule stopper frames (23) mounted to be moved along the long support members (20) respectively near the one end thereof, rule stoppers (25) mounted on the rule stopper frames (23) respectively, rule stopper moving apparatus having a servomotor (44) for moving the rule stopper frames (23), pad frames (26) fixed in a predetermined space to the rule stopper frame (23) on each of the long support members (20), and suction pads (28) mounted on each of the pad frames (26).

2. The suction table apparatus for a numerical control machine as set forth in claim characterized in that rule stopper moving apparatus having a servomotor (44) comprise a rotary shaft (37) penetrating holes of the rule stopper frames (23), both ends of the shaft (37) being supported by plumber blocks (33, 36) which are mounted on fixed stages (24, 30), a pinion (41) fixed the rotary shaft, a rack fixed on the one fixed stage and engaged with the pinion, a rule stopper moving servomotor (44) connected with the rotary shaft (37).

3. A suction table apparatus for a numerical control machine characterized by a plurality of long support members (20) mounted to be moved to a width direction of a table (17), rule stopper frames (23) fixed to one ends the long support members (20) respectively, rule stoppers (25) mounted on the rule stopper frames (23) respectively, pad frames (26) mounted to move on the long support members respectively, and suction pads (28) mounted on each of the pad frames (26), pad frames moving apparatus having a servomotor (60) for moving the pad frames (26).

4. The suction table apparatus of claim 3 characterized in that the pad frame moving apparatus comprises a rotary shaft (51) penetrating holes on the pad frames (26), both ends of the shaft (51) being supported by plumber blocks (50, 55) which are mounted on fixed stages (29, 30), a pinion (57) fixed the rotary shaft (51), a rack (56) fixed on the one fixed stage (30) and engaged with the pinion (57), a rule stopper moving servomotor (60) connected with the rotary shaft (51).

5. The suction table apparatus of any of the preceding claims characterized in that further pad frames (61) are mounted to move between the rule stopper frames (23) and the pad frames (26) on the long support members (20) respectively.

6. The suction table apparatus of any of the preceding claims characterized in that the moving apparatus for moving long support members (20) comprises servomotors (45) mounted on the long support members (20) respectively, a rack (46) mounted on the table (17) and pinions fixed the shafts of the servomotors, the pinions being engaged with rack (46).

7. The suction table apparatus of any of the preceding claims characterized in that the rule stoppers (25) and/or the suction pads (28) are mounted on up and down cylinders (24, 27) respectively.
